# EUROPEAN PATENT APPLICATION

(11) **EP 4 393 578 A1**
(43) Date of publication of application: **03.07.2024**
(21) Application number: 23218542.1
(22) Date of filing: 20.12.2023
(51) Int. Cl.: B01J 2/12, B01J 8/10, B01J 19/28

(54) **GRANULATING APPARATUS FOR PRODUCING MICROGRANULES**

(30) Priority: 30.12.2022 IT 202200027387
(71) Applicant: L.B. Officine Meccaniche S.p.A., 41042 Fiorano Modenese (Modena) (IT)
(72) Inventor: CAVANI, Giuseppe, 41043 Formigine, Modena (IT); FANTI, Corrado, 42123 Reggio Emilia (IT)
(74) Representative: Luppi Intellectual Property S.r.l.

(57) **Abstract**

A granulating apparatus for producing microgranules by agglomeration comprises a granulating chamber (2) which extends along a horizontal axis (X) and which can be driven in rotation around said horizontal axis (X), a dispersing element (3) which extends inside the granulating chamber (2) along a first axis (A) substantially parallel to the horizontal axis (X), the first axis (A) and the horizontal axis (X) being contained in the same first reference plane (P'), the first axis (A) being arranged, in use, below a second reference plane (P") perpendicular to the first reference plane (P'), the second reference plane (P") containing said horizontal axis (X), the granulating apparatus (1) comprising nozzles (5) arranged on a nozzle bar (6) which extends inside said granulating chamber (2) along a second axis (B) substantially parallel to the horizontal axis (X) and staggered with respect to the first reference plane (P'), the second axis (B) being arranged above the second reference plane (P").

## Description

The invention relates to a granulating apparatus for producing microgranules, in particular ceramic microgranules arranged to form the body of ceramic tiles once they have been formed by pressing. The invention can be applied both in the ceramic industry and in other industries such as for example, in the production of fertilizers, pet food, etc., wherein there arises the need to produce a granule from a fine powder using a granulation fluid.

Like in all industrial sectors, even in the field of producing ceramic tiles, technological solutions which allow to control energy consumption and, in particular, to reduce the use of energy resources, such as thermal energy and, therefore, fuel gas, and process fluids, such as water, are increasingly being sought.

In order to obtain ceramic tiles by pressing with high compactness, that is low water absorption and high breaking strength, it is necessary to select appropriate raw materials, for example substantially iron-free, reduce the particle size by grinding to increase the active surface of the raw material components, mix the ground raw materials so as to obtain an even distribution of the various components and a closer contact between them to promote vitrification and sintering during firing. The production of ceramic granules after grinding allows the forming of ceramic tiles by pressing. As a matter of fact, ceramic granules show greater flowability with respect to fine ceramic powders which instead are difficult to move precisely due to their high specific surface area. However, ceramic granules must also have other characteristics such as "pressability", in order to allow the pressed ceramic semifinished product sufficient compaction, measured in mechanical strength, which allows to move it along a processing line up to the firing step thereof.

As known, one of the most common methods for the production of ceramic tiles is the so-called 'dry method'.

In the "dry method", the raw materials are ground without adding water. The dry ground powder is then granulated in a controlled manner, obtaining granules with a water content of 9-14 %. The moisture content of the granules obtained is then brought to about 4-7% using a fluidized bed dryer. Through controlled granulation, there is obtained a ceramic powder, known as "micro-granulate" or "micro-granulated powder", having a moisture content, an average particle size, a certain flowability and a particle size distribution which are very close to those of the known "atomized powder", allowing the micro-granulated ceramic powder thus prepared to be formed by pressing. Subsequently, the compacted ceramic tile, commonly called "green", is fired in an oven.

There are machines for granulating by growth of microgranules comprising an agglomeration chamber that is cylindrical-shaped and rotatable around its longitudinal axis X, inside which there is provided for a dispersing element which rotates in the same direction as the agglomeration chamber. The material is introduced into the granulating chamber which is driven in rotation and it is moistened using water. Water is injected through nozzles provided for along the dispersing element. The injection of water allows the nucleation of microgranules, while the mechanical action promoted by the dispersing element disintegrates the agglomerates being formed to limit the maximum size of the granules.

However, the machine of the type described above reveals some drawbacks known to the person skilled in the art.

One of the disadvantages lies in the excessive amount of material that accumulates on the dispersing element. As a matter of fact, although granulating by injecting water through nozzles arranged on the dispersing element is effective, areas of first nucleation of microgranules are located close to the dispersing element with rapid formation of a crust of material that dirties the dispersing element and clogs the nozzles. This leads to necessary and frequent maintenance operations, resulting in machine downtime and increased costs. Furthermore, the accumulation of material on the dispersing element may lead to a deterioration in the quality of the micro-granulate exiting from the granulating machine.

One drawback granulating machines of the known type lies in the difficulty in controlling the granulating parameters to obtain a granulated powder of a certain quality. In particular, it is difficult to increase the flow rate of injected water given that the entire dispersing element needs to be replaced with a dispersing element which has a larger number of nozzles or the nozzles need to be replaced with nozzles with a larger dispensing hole. Therefore, changing the flow rate of water injected into the granulating chamber is complex and expensive.

A further drawback of granulating machines of the known type lies in the difficulty in performing maintenance operations on the nozzles, such as for example replacing or cleaning them, given that they are difficult to reach in the granulating machine. Therefore, these operations are carried out by removing the dispersing element, resulting in increased costs due to increased machine downtime.

In addition to the above, machines of the known type have channels that branch out inside the dispersing element and which are designed for transporting water for supplying the nozzles. The possibility that transporting fluids with a higher density than water could cause the nozzles and channels to clog given their design is known to the person skilled in the art.

Therefore, it is desirable to make a granulating apparatus for producing microgranules which allows to obtain a granulated powder efficiently, reducing production costs and plant downtime, making cleaning and maintenance easier.

An object of the invention is to improve prior art machines for the granulation of powders, in particular ceramic powders.

A further object is to provide a granulating apparatus designed so as to reduce machine cleaning and maintenance operations.

A further object is to provide a granulating apparatus which makes cleaning and maintenance of the nozzles easier.

Still, a further object is to provide a granulating apparatus which allows to adjust the flow rate of wet mixture easily and effectively.

According to the invention, a granulating apparatus is provided for producing microgranules as defined by the attached claims.

Owing to the invention, it is possible to produce a granulated powder, in particular a ceramic powder in granules that is sufficiently slidable, for example to feed a ceramic press, reducing the amount of process water and therefore the energy required for the removal thereof.

Owing to the apparatus according to the invention, it is possible to produce microgranules, in particular microgranules or micro-granulated powder, reducing the formation of crusts of material inside the granulating chamber and on the dispersing element.

Still, owing to the invention, it is possible to increase the flow rate of the humidifier fluid inside the granulating chamber by avoiding the replacement of the dispersing element or the replacement of the nozzles.

The invention will be clearer and implemented with reference to the to the attached drawings which show some exemplifying and non-limiting embodiments thereof, wherein:
Figure 1 is a section schematic front view of a granulating apparatus according to a first embodiment;
Figure 2 is a section schematic front view of a granulating apparatus according to a second embodiment.
Figure 3 is a schematic lateral view of the granulating apparatus of figure 1.

With reference to the figures, the granulating apparatus 1 according to the invention comprises a granulating chamber 2 which extends along a horizontal axis X. The granulating chamber 2 can be driven in rotation around the horizontal axis X. The granulating chamber 2 may be substantially cylindrical-shaped.

The granulating chamber 2 is configured to contain powdered raw materials. The granulating apparatus 1 can be used both in the ceramic industry, to obtain ceramic microgranules and micro-granulated powder, and in other industries such as for example, in the production of fertilizers, pet food, etc., wherein a granule need to be produce from a fine powder using a granulating fluid. In use, the inside of granulating chamber 2 is supplied with fine powders to be granulated and with a granulating fluid. Hereinafter, the fine powders to be granulated will be referred to as "dry mixture" and the granulating fluid will be referred to as "wet mixture". The dry mixture can be a mixture of powdered raw materials with low moisture content. A wet mixture, also referred to as fluid mixture, which defines the granulating fluid, may be a mixture comprising water. For example, the wet mixture can be a mixture of raw materials in an aqueous carrier, such as for example an aqueous suspension of solid particles (commonly referred to as slip), or it can be water or an aqueous solution. Hereinafter, by way of non-limiting example, reference will be made to the use of the granulating apparatus 1 in the ceramic tile industry. In this industry, the dry mixture can be a mixture of powdered (inorganic) ceramic raw materials with low moisture content. In this industry, the wet mixture may be an aqueous suspension of solid ceramic particles (slip), or it may be water, optionally added with additives such as for example binders, fluidifying agents, etc.

The granulating chamber 2 is rotatable at a speed comprised between 5 and 25 revolutions/min. In particular, the granulating chamber 2 is rotatable at a speed comprised between 8 and 22 revolutions/min. The rotation of the granulating chamber 2 also contributes to the mixing of the raw materials contained therein.

The granulating apparatus 1 further comprises a dispersing element 3 which extends inside the granulating chamber 2. In particular, the dispersing element 3 extends along a first axis A. The first axis A is substantially parallel to the horizontal axis X. The first axis A and the horizontal axis X can be contained in the same first reference plane P'.

The first axis A is arranged, in use, below a second reference plane P". The second reference plane P" is perpendicular to the first reference plane P'. The second reference plane P" contains the horizontal axis X. The second reference plane P" is substantially parallel, in particular parallel to a horizontal resting plane on which the granulating apparatus 1 rests during use.

The granulating apparatus 1 according to the present invention comprises nozzles 5. The nozzles 5 are configured to dispense the wet mixture, for example water or slip, inside the granulating chamber 2. Each of the nozzles 5 is provided with a dispensing hole whose size is comprised between 0.2 mm and 5 mm. Preferably, the size of the dispensing hole is comprised between 0.8 and 3 mm. The nozzles 5 inject the wet mixture with an injection pressure which may range from 0.5 MPa (5 bar) to 10 MPa (100 bar) . Preferably, the injection pressure may range from 2.5 MPa (25 bar) to 5 MPa (50 bar). Still preferably, the injection pressure is comprised in the range from 1 MPa (10 bar) to 3 MPa (30 bar). The nozzles 5 are further configured to dispense wet mixture with a spray angle comprised between 0 and 45 sexagesimal degrees. The nozzles 5 are arranged on a nozzle bar 6.

The nozzles 5 may dispense the wet mixture at the same time. For example, the nozzles 5 can be controlled by a single valve, not shown, which actuates the nozzles 5 at the same time.

According to an embodiment, the nozzle bar 6 may comprise a plurality of nozzles 5 which can be activated selectively. For example, the nozzle bar 6 may comprise a plurality of valves (not shown); each valve is configured to actuate a nozzle of the plurality of nozzles 5. By way of non-limiting example, the nozzle bar 6 may comprise nozzles 5 which are selectively activated depending on the amount of wet mixture to be injected into the granulating chamber 2. This allows a user to set the dispensing of the wet mixture using only one nozzle or using two nozzles or using all nozzles of the plurality of nozzles 5 depending on the needs.

The nozzle bar 6 extends into the granulating chamber 2 along a longitudinal axis, hereinafter indicated as second axis B. The second axis B is substantially parallel to the horizontal axis X and staggered with respect to the first reference plane P'. The second axis B is arranged above the second reference plane P".

According to the present invention, the angular position of the nozzle bar 6 can be defined considering a half-plane M which originates from the horizontal axis X and which contains the second axis B. The half-plane M is arranged at an angular distance α from the first reference plane P' comprised between 15 and 70 sexagesimal degrees. In a preferred version, the half-plane M is arranged at an angular distance α from the first reference plane P' comprised between 20 and 50 sexagesimal degrees.

The nozzle bar 6 is arranged at a radial distance from said horizontal axis X comprised between 0.6 and 0.8 times the radius of the granulating chamber 2, where the expression radius is used to indicate the distance between said horizontal axis X and an inner cylindrical wall of the granulating chamber 2. By way of non-limiting example, if the granulating chamber 2 has the radius of 800 mm, the nozzle bar 6 is arranged at a radial distance from the horizontal axis X comprised between 480 and 640 mm.

In the light of the above, in use, the dispersing element 3 is arranged below the second reference plane P", while the nozzle bar 6 is arranged above the second reference plane P".

The dry mixture introduced into the granulating chamber 2 accumulates below the second reference plane P" and the nozzle bar 6. In particular, the dry mixture forms a powder bed L which, as a result of the rotation of the granulating chamber 2 and the gravity, is substantially arranged in a tilted plane with respect to the second reference plane P".

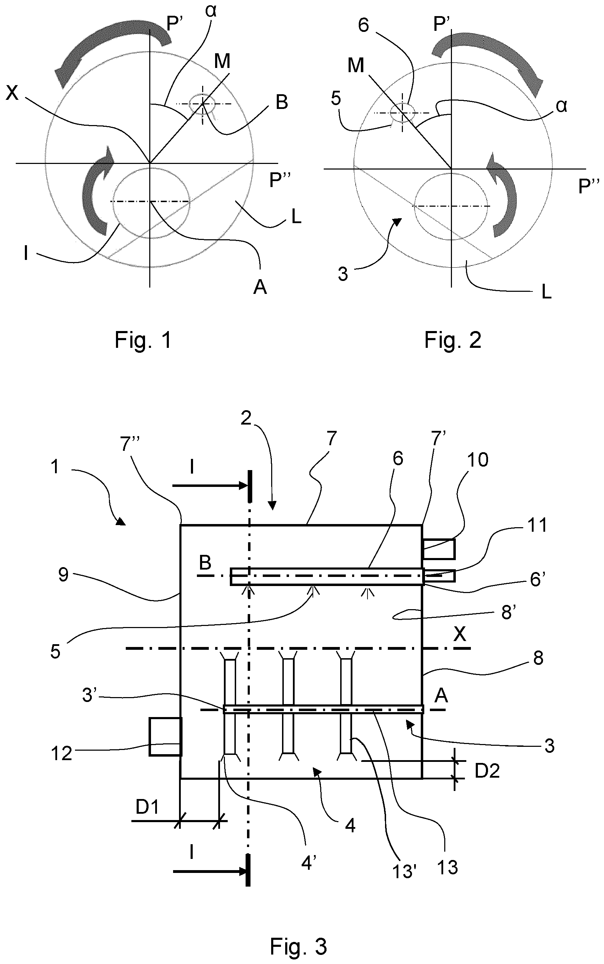

In a first embodiment shown in Figure 1, the granulating chamber 2 is configured to rotate in the clockwise direction and the nozzle bar 6 is arranged to the left of the first reference plane P'. When granulating chamber 2 rotates clockwise, the dry mixture is arranged predominantly to the left of the first reference plane P' .

In a second embodiment shown in Figure 2, the granulating chamber 2 is configured to rotate in the anticlockwise direction and the nozzle bar 6 is arranged to the right of the first reference plane P'. When the granulating chamber 2 rotates in the anticlockwise direction, the dry mixture is arranged predominantly to the right of the first reference plane P'.

The dispersing element 3 can be driven in rotation according to a rotation direction opposite to the rotation direction of the granulating chamber 2. Therefore, when the granulating chamber 2 rotates in the clockwise direction, the dispersing element 3 rotates in the anticlockwise direction; when the granulating chamber 2 rotates in the anticlockwise direction, the dispersing element 3 rotates in the clockwise direction. The rotation speed of the dispersing element 3 is, for example, comprised between 800 and 1800 revolutions/min.

The dispersing element 3 has the purpose of interacting with the powder bed L, lifting and dispersing the ultra-fine dry powder in the granulating chamber 2 to increase the number of solid particles which come into contact with the fluid mixture facilitating the nucleation of granules. Furthermore, the dispersing element 3 projects the fine particles against each other so as to promote an increase in the number of contacts of the finer powder particles and to control the growth of the agglomerates that have grown excessively; it projects the finer powder in a radial direction into the granulating chamber and crushes the larger agglomerates, limiting a maximum granule size during the formation thereof. Given the position of the nozzle bar 6, the rotation direction of the dispersing element 3 is set so as not to project the powders against the nozzle bar 6; this reduces the risk of microgranules nucleating close to the nozzle bar 6 and accumulation of solid material aggregated at the nozzles 5, which could clog the nozzles 5 and divert the jet of the working fluid exiting from the nozzles 5 therefore reducing the efficiency of the granulating apparatus 1. In other words, the position of nozzle bar 6 allows to reduce the number of cleaning operation on the nozzle bar 6.

The granulating chamber 2 comprises a tubular body 7 rotatable around the horizontal axis X and a first wall 8 fixed with respect to the tubular body 7. In other words, in use, the tubular body 7 rotates around the horizontal axis X while the first wall 8 is fixed, i.e. the first wall 8 is stationary unlike the tubular body 7 during use. In particular, the tubular body 7 may be a cylindrical body.

The first wall 8 is arranged at a first end 7' of the tubular body. The first wall 8 comprises an inner face 8' which extends on a plane substantially perpendicular to the horizontal axis X. The first wall 8 can support the nozzle bar 6. The nozzle bar 6 projects from the inner face 8' towards a second end 7" of the tubular body 7 opposite to the first end 7". In other words, the nozzle bar 6 is projected in a cantilever fashion from the first wall 8 toward the internal of the tubular body 7.

The dispersing element 3 is projected from the inner face 8' towards the second end 7" of the tubular body 7. In other words, the dispersing element 3 is projected in a cantilever fashion from the first wall 8 towards the internal of the tubular body 7.

The first wall 8 may comprise a hole which allows the dispersing element 3 to pass through so that the dispersing element 3 is projected into the tubular body 7 from the inner face 8' towards the second end 7". The dispersing element 3 may be supported by an external frame.

The granulating chamber 2 further comprises a second wall 9 which extends on a plane substantially perpendicular to the horizontal axis and arranged at the second end 7" of the tubular body 7. The second wall 9 is fixed with respect to the rotation to the tubular body 7. In other words, in use, the tubular body 7 rotates around the horizontal axis X while second wall 9 is fixed, i.e. the second wall 9 is stationary unlike the tubular body 7 during use.

The granulating chamber 2 further comprises a first inlet opening 10 for dry mixture and a second inlet opening 11 for wet mixture. The first inlet opening 10 for dry mixture and the second inlet opening 11 for wet mixture can be arranged on the first wall 8. In particular, the first inlet opening 10 and the second inlet opening 11 are arranged above the second reference plane P".

The first inlet opening 10 for dry mixture may be a through opening on the first wall 8 so as to allow the dry mixture to pass from a dry mixture supply device into the granulating chamber 2. In particular, at least one portion of the dry mixture supply device may be connected to the first inlet opening 10.

The nozzle bar 6 may be connected to the second inlet opening 11 for wet mixture. In particular, the nozzle bar 6 may comprise an end 6' and the second inlet opening 11 for wet mixture may be connected to the end 6' of the nozzle bar 6. The nozzle bar 6 may comprise duct elements, not shown, which allow the wet mixture to pass from wet mixture supply means to the nozzle bar 6. In particular, duct elements may connect the wet mixture supply means to the nozzles 5. The duct elements may comprise at least one supply channel which connects the wet mixture supply means to the nozzles 5. In a version, the at least one supply channel may be obtained in the nozzle bar 6; in other words, the at least one supply channel may be a cavity in the nozzle bar 6 which connects the wet mixture supply means to the nozzles 5.

According to an embodiment, the duct elements may comprise two or more supply channels. Each supply channel is designed to supply a nozzle assembly (the expression nozzle assembly is used to indicate a set of nozzles comprising one or more nozzles 5). Each nozzle assembly can be activated selectively.

The granulating chamber 2 further comprises an outlet opening 12 configured to allow the discharge of the micro-granulate from the granulating chamber. The outlet opening 12 may be obtained on the second wall 9. The outlet opening 12 may be a through opening obtained on the second wall 9. In particular, the outlet opening 12 may be arranged below the second reference plane P". In a version not shown, the outlet opening 12 extends up to an inner wall of the tubular body 7.

The dispersing element 3 comprises at least one stirring blade 4'. The expression stirring blade is used to indicate an element which is projected radially with respect to the first axis A. For example, at least one stirring blade 4' may be a spatula and/or a blade. The at least one stirring blade 4' is arranged at a first end 3' of the dispersing element 3 closest to the second wall 9. The at least one stirring blade 4' is arranged at a predefined distance D1 from the second wall 9 which may be comprised between 140 and 220 mm. Alternatively, the distance D1 is comprised between 0.03 and 0.08 times the radius of the granulating chamber 2 should the distance D 1 be measured between the stirring blade 4' and a containing surface substantially parallel to the second wall 9 and further inside the granulating chamber 2, such as for example the surface of a diaphragm, not shown in the figures, which may be present near the outlet opening 12.

The dispersing element 3 may further comprise a sleeve element 13 which can be driven in rotation around the first axis A. The at least one stirring blade 4' is comprised in a plurality of stirring blades 4. The stirring blades of the plurality of stirring blades 4 are mounted on discs 13' which project radially from an outer surface of the sleeve element 13. The stirring blades of the plurality of stirring blades 4 extend radially with respect to the first axis A. There is provided for a minimum radial distance D2 between the stirring blades of the plurality of stirring blades and the inner surface of the tubular body 7. Such radial distance D2 is predefined and it may be comprised between 20 and 100 mm. In particular, such radial distance D2 is comprised between 0.04 and 0.06 times the radius of granulating chamber 2.

According to an embodiment, not shown, the dispersing element 3, and in particular the sleeve element 13, may comprise holes configured to inject a fluid mixture into the granulating chamber 2. Such holes allow to increase the flow rate of fluid mixture injected into the granulating chamber 2. Furthermore, different fluid mixtures can be injected simultaneously into the granulating chamber 2 through such holes. For example, slip can be injected through the nozzles 5 and, at the same time, water can be injected through the holes present on the sleeve element 13.

During the rotation of the dispersing element 3, the stirring blades 4 occupy a volume inside the granulating chamber 2. Such volume may comprise at least one space portion I arranged below the second reference plane P". In a preferred embodiment, the volume occupied by the stirring blades 4 is substantially cylindrical-shaped and it is entirely arranged below the second reference plane P".

The granulating apparatus 1 may comprise tilting means, not shown, configured to tilt the granulating chamber 2. In particular, the granulating chamber 2 can be tilted with respect to a reference horizontal plane with a tilt comprised between 0 and 2 sexagesimal degrees. Such tilt may be imparted to facilitate the exit of the micro-granulate from the granulating chamber 2. As a matter of fact, by increasing the tilt of the granulating chamber 2, the flow rate of micro-granulate exiting from the granulating chamber 2 increases and the granulation time decreases. The possibility of controlling the tilt of the granulating chamber allows to control the granulation time and, as a result, it allows to control the particle size curve of the micro-granulate exiting from the granulating apparatus 1.

According to the present invention, the granulating apparatus 1 may comprise a further nozzle bar arranged in the granulating chamber 2. In particular, the further nozzle bar is arranged along an axis substantially parallel to the horizontal axis X and staggered with respect to the first reference plane P', so as to be substantially parallel to the nozzle bar 6. Furthermore, the further nozzle bar may be arranged above the second reference plane P".

The nozzle bar 6 and the further nozzle bar can both be arranged to the right of the first reference plane P'. In particular, the nozzle bar 6 and the further nozzle bar can both be arranged to the right of the first reference plane P' when the granulating chamber 2 is configured to rotate in the anticlockwise direction.

The nozzle bar 6 and the further nozzle bar can both be arranged to the left of the first reference plane P'. In particular, the nozzle bar 6 and the further nozzle bar can both be arranged to the left of the first reference plane P' when the granulating chamber 2 is configured to rotate in the clockwise direction.

According to an embodiment not shown, the granulating chamber 2 can be driven in rotation both in the clockwise direction and in the anticlockwise direction. In such embodiment, the nozzle bar 6 is arranged to the right of the first reference plane P' while the further nozzle bar is arranged to the left of the first reference plane P'. When the granulating chamber 2 rotates in the anticlockwise direction, the nozzle bar 6 is actuated to inject the wet mixture; when the granulating chamber 2 rotates in the clockwise direction, the further nozzle bar is actuated to inject the wet mixture.

In the light of the above, the granulating apparatus attains all intended objects by overcoming the drawbacks of the prior art.

In particular, the granulating apparatus according to the present invention allows to obtain a granulated powder, in particular a ceramic granule powder, efficiently reducing production costs and plant downtime. Owing to the nozzle bar, it is possible to inject wet mixture directly onto the dry mixture bed without wetting the dispersing element; this allows to reduce the formation of crusts on the dispersing element, reducing the need for cleaning and maintenance of the granulating apparatus.

Owing to the present invention, nozzle cleaning and maintenance operations are facilitated. As a matter of fact, the position of the nozzle bar makes it easier to remove the nozzle bar and facilitates maintenance and cleaning, allowing for more thorough cleaning and shortening plant downtime.

Furthermore, the possibility of activating the nozzles selectively allows to regulate the flow rate of the wet mixture easily and effectively, allowing adequate flow rate adjustment without the need to replace parts of the apparatus, such as for example the dispersing element, with resulting cost-effectiveness and improved productivity.

## Claims

1. Granulating apparatus for producing microgranules by agglomeration comprising a granulating chamber (2) which extends along a horizontal axis (X) and which is rotatable around said horizontal axis (X), a dispersing element (3) which extends inside said granulating chamber (2) along a first axis (A) substantially parallel to said horizontal axis (X), said first axis (A) and said horizontal axis (X) being contained in the same first reference plane (P'), said first axis (A) being arranged, in use, below a second reference plane (P") perpendicular to said first reference plane (P'), said second reference plane (P") being substantially parallel to a horizontal resting plane on which said granulating apparatus (1) rests and containing said horizontal axis (X), said granulating apparatus (1) being **characterised in that** it comprises nozzles (5) arranged on a nozzle bar (6) which extends inside said granulating chamber (2) along a second axis (B) substantially parallel to said horizontal axis (X) and staggered with respect to said first reference plane (P'), said second axis (B) being arranged above said second reference plane (P").

2. Granulating apparatus (1) according to claim 1, wherein said granulating chamber (2) is configured to rotate clockwise and said nozzle bar (6) is arranged to the left of said first reference plane (P').

3. Granulating apparatus (1) according to claim 1, wherein said granulating chamber (2) is configured to rotate anticlockwise and said nozzle bar (6) is arranged to the right of said first reference plane (P').

4. Granulating apparatus (1) according to any one of the preceding claims, wherein said dispersing element (3) is rotatable according to a rotation direction opposite to the rotation direction of said granulating chamber (2).

5. Granulating apparatus (1) according to any one of the preceding claims, wherein each of said nozzles (5) comprises a dispensing hole of a dimension comprised between 0.2 mm and 5 mm.

6. Granulating apparatus (1) according to any one of the preceding claims, wherein said granulating chamber (2) is rotatable at a speed comprised between 5 and 25 revolutions/min.

7. Granulating apparatus (1) according to any one of the preceding claims, wherein said granulating chamber (2) is tiltable with respect to a reference horizontal plane with a tilt comprised between 0 and 2 sexagesimal degrees.

8. Granulating apparatus (1) according to any one of the preceding claims, wherein said granulating chamber (2) comprises a tubular body (7) rotatable around said horizontal axis (X) and a first wall (8) stationary unlike said tubular body (7) during use and arranged at a first end (7') of said tubular body (7), said first wall (8) comprising an inner face (8') which extends on a plane substantially perpendicular to said horizontal axis (X), said first wall (8) supporting said nozzle bar (6) so that said nozzle bar (6) is projected from said inner face (8') towards a second end (7") of said tubular body (7) opposite to said first end (7').

9. Granulating apparatus (1) according to claim 8, wherein said granulating chamber (2) further comprises a second wall (9) which extends on a plane substantially perpendicular to said horizontal axis (X), arranged at said second end (7"), said second wall (9) being stationary unlike said tubular body (7) during use.

10. Granulating apparatus (1) according to claim 9, comprising an outlet opening (12) obtained on said second wall (9).

11. Granulating apparatus (1) according to claim 9 or 10, wherein said dispersing element (3) comprises at least one stirring blade (4') arranged at a first end (3') nearer to said second wall (9), said at least one stirring blade (4') being arranged at a distance (D1) from said second wall (9) comprised between 140 and 220 mm, or between 0.03 and 0.08 times the radius of said granulating chamber (2) if said distance (D1) is measured between said stirring blade (4') and a containing surface substantially parallel to said second wall (9) and further inside said granulating chamber (2).

12. Granulating apparatus (1) according to any one of claims 8 to 11, comprising a first inlet opening (10) for dry mixture and a second inlet opening (11) for wet mixture arranged on said first wall (8), said second inlet opening (11) for wet mixture being connected to an end (6') of said nozzle bar (6).

13. Granulating apparatus (1) according to any one of the preceding claims, wherein said dispersing element (3) comprises a sleeve element (13) rotatable around said first axis (A) and said sleeve element (13) comprises holes configured to inject a fluid mixture into said granulating chamber (2).

14. Granulating apparatus (1) according to claim 13, as claim 13 is appended to claim 11, wherein the at least one stirring blade (4') is comprises in a plurality of stirring blade (4) extending radially with respect to said first axis (A) and a minimum radial distance (D2) between stirring blades of said plurality of stirring blades (4) and an inner surface of said tubular body (7) is comprised between 20 and 100 mm, in particular between 0.04 and 0.06 times the radius of the granulating chamber (2).

15. Granulating apparatus (1) according to any one of the preceding claims, wherein an axis of longitudinal extent (B) of said nozzle bar (6) is contained in a semi-plane (M) which originates from said horizontal axis (X), said semi-plane (M) being arranged at an angular distance α from said first reference plane (P') comprised between 15 and 70 sexagesimal degrees, in particular between 20 and 50 sexagesimal degrees.

16. Granulating apparatus (1) according to any one of the preceding claims, wherein said nozzles (5) are configured to dispense fluid mixture with a spray angle comprised between 0 and 45 sexagesimal degrees.

17. Granulating apparatus (1) according to any one of the preceding claims, wherein said nozzles (5) are activable selectively.

18. Granulating apparatus (1) according to any one of the preceding claims, wherein said granulating chamber (2) is substantially cylindrical-shaped and said nozzle bar (6) is arranged at a radial distance from said horizontal axis (X) comprised between 0.6 and 0.8 times the radius of said granulating chamber (2), in which radius is the distance between said horizontal axis (X) and an inner cylindrical wall of said granulating chamber (2).

19. Granulating apparatus (1) according to any one of the preceding claims, comprising a further nozzle bar arranged in said granulating chamber (2) substantially parallel to said nozzle bar (6).
